# DEMANDE DE BREVET EUROPEEN

(11) **EP 1 614 874 A1**
(43) Date de publication de la demande: **11.01.2006**
(21) Numéro de dépôt: 05300560.9
(22) Date de dépôt: 05.07.2005
(51) Int. Cl.: F02B 23/06

(54) **Moteur à combustion interne comportant un piston muni d'une cavité a paroi tronconique**

(30) Priorité: 09.07.2004 FR 0407679
(71) Demandeur: Renault s.a.s., 92100 Boulogne Billancourt (FR)
(72) Inventeur: FASOLO, Bertrand, ANTONY, 92160 (FR)
(74) Mandataire: Rougemont, Bernard

(57) **Abrégé**

Moteur à combustion interne, comportant un piston (14), monté mobile dans une chambre (10), dans une face (16) supérieure libre duquel débouche une cavité (18) de, et du type qui comporte un injecteur (20) de carburant agencé sensiblement dans l'axe (A) de la cavité (18) de révolution dont au moins un orifice (22) est susceptible de pulvériser un jet (24) de carburant selon un axe (B₃) de pulvérisation déterminé associé dans la cavité (18) de révolution, caractérisé en ce que l'axe (B) de pulvérisation forme avec l'axe (A) de la cavité (18) de révolution un angle (β₃) compris entre 40 et 60 degrés et en ce que la cavité (18) de révolution comporte au moins une paroi (36) de révolution sensiblement tronconique agencée à la perpendiculaire de l'axe (B₃) de pulvérisation.

## Description

L'invention concerne un moteur à combustion interne.

L'invention concerne plus particulièrement un moteur à combustion interne, à allumage par compression et à injection directe, du type qui comporte au moins une chambre de combustion qui est délimitée d'une part par une culasse du moteur et d'autre par un piston, monté mobile dans la chambre, dans une face supérieure libre duquel débouche une cavité de révolution en forme de bol, et du type qui comporte un injecteur de carburant agencé sensiblement dans l'axe de la cavité de révolution dont au moins un orifice est susceptible de pulvériser un jet de carburant selon un axe de pulvérisation déterminé associé dans la cavité de révolution en forme de bol, notamment lorsque le piston atteint une position dite de point mort haut.

On connaît de nombreux exemples de moteurs de ce type. Ce type de piston, muni d'une cavité de révolution, est plus particulièrement destiné aux moteur de type "diesel" à injection directe, car il permet de réaliser un mélange d'air et de carburant plus homogène dans la chambre.

Il est connu que les caractéristiques du mélange air/carburant obtenu dans la chambre dépendent directement de l'angle sous lequel le carburant est injecté au niveau de la cavité du piston, et de la forme même de cette cavité.

Le carburant, lorsqu'il est injecté par le ou les orifices de l'injecteur de carburant, détermine un cône dont l'ouverture, aussi appelée "angle de nappe" est primordiale.

Plusieurs solutions sont connues de l'état de technique.

Selon une première conception conventionnelle connue, la chambre de combustion comporte un injecteur dont l'angle de nappe est relativement élevé, c'est à dire typiquement de l'ordre de 140 à 160 degrés. Cet injecteur est implanté dans la culasse de manière que les points d'impact des jets de carburant soient placés en périphérie du bol du piston.

Cette configuration pose de nombreux problèmes. En effet, lors de sa pulvérisation, le carburant peut être amené à interagir avec lui-même et conduire à une production élevées de suies dans les zones ou l'oxygène de l'air se fait rare, le jet de carburant se recouvrant à l'intérieur du bol avant d'accéder à l'espace libre délimité entre la surface supérieure du piston et la culasse. Par ailleurs, l'exploitation de l'oxygène dans l'espace libre délimité entre la surface supérieure du piston et la culasse n'est pas optimale car les jets de carburant n'atteignent pas rapidement cette zone. Enfin, ce type de chambre de combustion ne permet pas d'effectuer d'injection de carburant avant que le piston n'atteigne le point mort haut, car l'angle de nappe élevé conduit à un arrosage de la paroi périphérique du cylindre, avec pour conséquence une dilution élevée du lubrifiant qui la recouvre.

Selon une seconde conception conventionnelle connue, la chambre de combustion comporte un injecteur dont l'angle de nappe est peu élevé, c'est à dire typiquement de l'ordre de 50 à 60 degrés. Cet injecteur est implanté dans la culasse de manière que les points d'impact des jets de carburant soient placés au centre du bol du piston, sur une protubérance centrale du bol.

Cette configuration permet d'éviter l'arrosage de la paroi du cylindre lorsqu'une injection de carburant est effectuée avant que le piston n'atteigne le point mort haut. Par contre, compte tenu du parcours des jets de carburant qui s'effectue en majorité le long des parois du bol, la zone située au centre du bol ne bénéficie pas d'une répartition optimale du mélange air/carburant.

Pour remédier à cet inconvénient, l'invention propose une configuration de la chambre de combustion permettant d'assurer une répartition optimale du carburant en tous points de la chambre de combustion.

Dans ce but, l'invention propose un moteur du type décrit précédemment, caractérisé en ce que l'axe de pulvérisation forme avec l'axe de la cavité de révolution un angle compris entre 40 et 60 degrés et en ce que la cavité de révolution comporte au moins une paroi de révolution sensiblement tronconique agencée à la perpendiculaire de l'axe de pulvérisation, pour dissiper une partie de l'énergie du jet de carburant au point d'impact du jet sur la paroi de révolution et éviter ainsi que ledit jet ne se recouvre.

Selon d'autres caractéristiques de l'invention :
- la paroi tronconique de révolution s'étend de manière équidistante de part et d'autre du point d'impact du jet de manière à provoquer une division uniforme du jet de carburant pour assurer un mélange uniforme du carburant avec l'oxygène contenu dans la cavité de révolution,
- la cavité de révolution comporte :
   - une protubérance centrale, s'étendant radialement depuis l'axe de la cavité de révolution jusqu'à un diamètre intérieur de la paroi tronconique de révolution,
   - un rebord périphérique, agencé radialement à l'extérieur de la paroi tronconique de révolution et affleurant à la surface supérieure libre du piston,
   qui sont destinés à confiner le carburant dans la cavité de révolution,
- la protubérance centrale est conformée en dôme dont le sommet est d'une courbure déterminée et dont les flancs sont jointifs avec le diamètre intérieur de la paroi tronconique de révolution,
- le rebord périphérique comporte au moins une partie annulaire torique convexe formant un bourrelet qui s'étend au dessus d'une partie de la paroi tronconique de révolution et qui affleure à la surface supérieure libre du piston,
- l'injecteur comporte au moins trois orifices répartis angulairement de manière régulière autour de l'axe de la cavité de révolution,
- la cavité de révolution est réalisée par usinage de la tête du piston.

D'autres caractéristiques et avantages de l'invention apparaîtront à la lecture de la description détaillée qui suit pour la compréhension de laquelle on se reportera aux dessins annexés dans lesquels :
- la figure 1 est une vue de détail en coupe d'une chambre de combustion selon un premier état antérieur de la technique,
- la figure 2 est une vue de détail en coupe d'une chambre de combustion selon un second état antérieur de la technique,
- la figure 3 est une vue de détail en coupe d'une chambre de combustion selon l'invention.

Dans la description qui va suivre, des chiffres de référence identiques désignent des pièces identiques ou ayant des fonctions similaires.

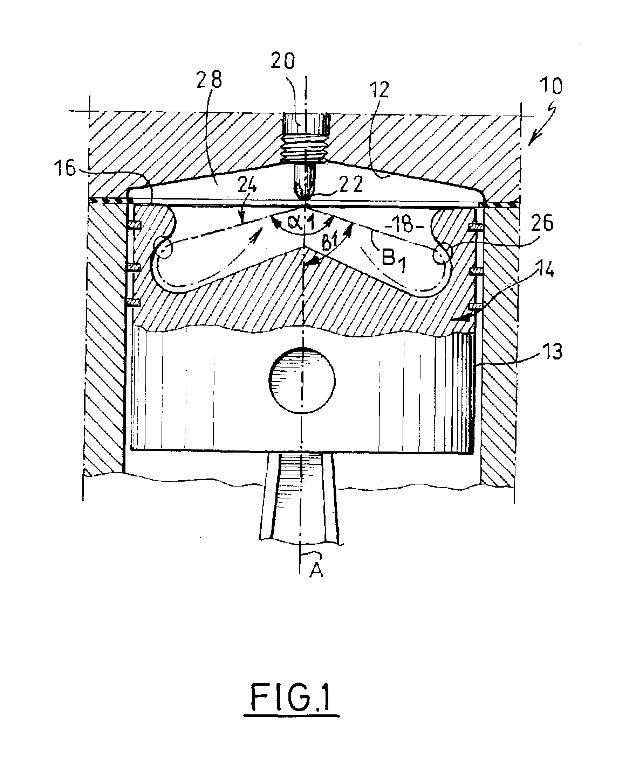

On a représenté à la figure 1 le détail d'une chambre de combustion 10 d'un moteur à combustion interne, à allumage par compression et à injection directe. De manière connue, la chambre de combustion 10 est délimitée d'une part par une culasse 12 du moteur et d'autre par un piston 14, monté mobile dans un cylindre 13 de la chambre 10, dans une face supérieure 16 libre duquel débouche une cavité 18 de révolution en forme de bol, et elle comporte un injecteur 20 de carburant agencé sensiblement dans l'axe "A" de la cavité 18 de révolution. Au moins un orifice 22 de l'injecteur 20 est susceptible de pulvériser un jet 24 de carburant selon un axe "B₁", "B₂", ou "B₃" de pulvérisation déterminé associé dans la cavité 18 de révolution en forme de bol, notamment lorsque le piston 14 atteint une position dite de point mort haut.

La chambre 10 est alimentée en air par des soupapes, qui, par souci de facilité de lecture des figures, n'ont pas été représentées et sont agencées dans un plan différent du plan de coupe des figures 1 à 3.

En particulier, l'axe de pulvérisation constitue la génératrice d'un cône théorique dont l'ouverture, aussi appelée "angle de nappe" est primordiale. Dans le cas d'un injecteur sensiblement axial, cet angle de nappe correspond au double de l'angle formé entre l'axe de pulvérisation et l'axe "A" de la cavité de révolution

On connaît de nombreux exemples de moteurs comportant des chambres 10 de ce type.

Selon une première conception connue qui a été représentée à la figure 1, la chambre de combustion comporte un injecteur 22 dont l'angle "α₁" de nappe est relativement élevé, c'est à dire typiquement de l'ordre de 140 à 160 degrés. L'axe "B₁" de pulvérisation forme donc un angle *"*β₁*"* de 70 à 80 degrés avec l'axe "A".

Cet injecteur 22 est implanté dans la culasse de manière que les points d'impact 26 des jets 24 de carburant soient placés en périphérie de la cavité intérieure 18 du piston 14.

Cette configuration pose de nombreux problèmes. En effet, lors de sa pulvérisation, le carburant peut être amené à interagir avec lui-même, comme l'illustre la flèche en traits mixtes de la figure 1, et conduire à une production élevées de suies dans les zones ou l'oxygène de l'air se fait rare, le jet 24 de carburant se recouvrant à l'intérieur de la cavité 24 de révolution du piston avant d'accéder à l'espace libre 28 délimité entre la surface supérieure 16 du piston 14 et la culasse 12. Par ailleurs, l'exploitation de l'oxygène dans l'espace libre 28 délimité entre la surface supérieure 16 du piston 14 et la culasse 12 n'est pas optimale car les jets 24 de carburant n'atteignent pas rapidement cette zone 28. Enfin, ce type de chambre 10 de combustion ne permet pas d'effectuer d'injection de carburant avant que le piston 14 n'atteigne le point mort haut, car l'angle "α₁" de nappe élevé conduit à un arrosage de la paroi périphérique du cylindre 13, avec pour conséquence une dilution élevée du lubrifiant qui la recouvre.

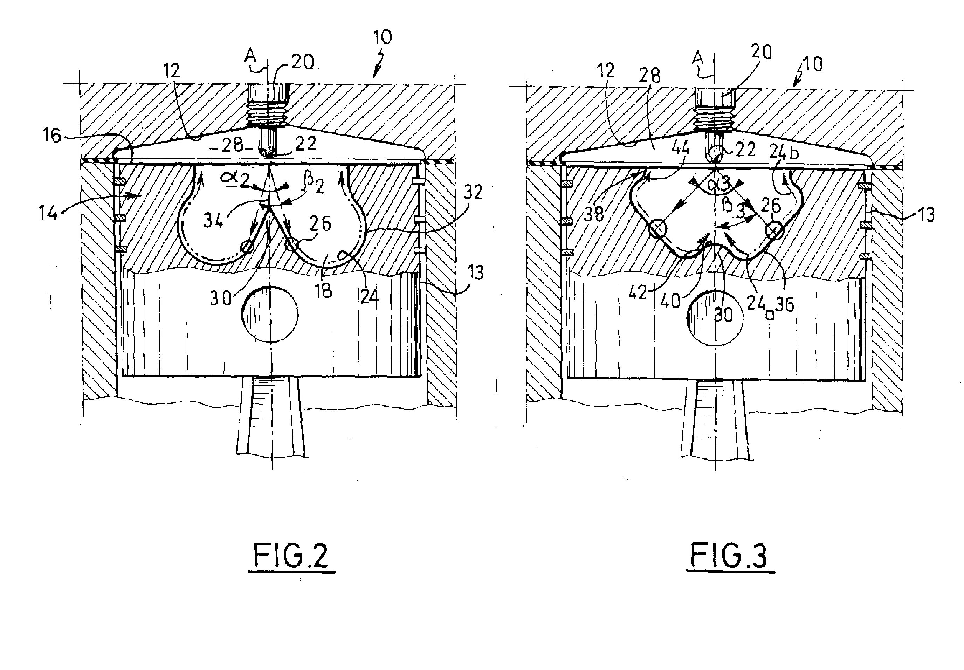

Pour remédier à cet inconvénient, on a proposé une seconde conception conventionnelle connue, qui a été illustrée à la figure 2.

Dans cette configuration, la chambre 10 de combustion comporte un injecteur 20 dont l'angle "α₂" de nappe est peu élevé, c'est à dire typiquement de l'ordre de 50 à 60 degrés. L'axe "B₂" de pulvérisation forme donc un angle "β₂" de 25 à 30 degrés avec l'axe "A".

Cet injecteur 20 est implanté dans la culasse 12 de manière que les points d'impact 26 des jets 24 de carburant soient placés au centre de la cavité intérieure 18 du piston 14, pratiquement sur une protubérance centrale 30 du bol.

Cette configuration permet d'éviter l'arrosage de la paroi du cylindre lorsqu'une injection de carburant est effectuée avant que le piston n'atteigne le point mort haut.

Par contre, compte tenu du parcours des jets 24 de carburant qui s'effectue en majorité le long des parois 32 de la cavité de révolution, comme représenté en traits mixtes sur la figure 2, la zone 34 située au centre du bol ne bénéficie pas d'une répartition optimale du mélange air/carburant.

L'invention remédie à ces inconvénients en proposant une configuration de la chambre de combustion permettant d'assurer une répartition optimale du carburant en tous points de la chambre de combustion.

Dans ce but, l'invention propose un moteur du type décrit précédemment, caractérisé en ce que l'axe "B₃" de pulvérisation forme avec l'axe "A" de la cavité 18 de révolution un angle "β₃" compris entre 40 et 60 degrés, c'est à dire correspondant à un angle "α₃" de nappe compris entre 80 et 120 degrés, et en ce que la cavité 18 de révolution comporte au moins une paroi 36 de révolution sensiblement tronconique agencée à la perpendiculaire de l'axe "B" de pulvérisation, pour dissiper une partie de l'énergie du jet de carburant au point d'impact 26 du jet 24 sur la paroi 36 de révolution et éviter ainsi que ledit jet 24 ne se recouvre.

Dans le mode de réalisation préféré de l'invention, la paroi 36 tronconique de révolution s'étend de manière équidistante de part et d'autre du point d'impact 26 du jet 24 de manière à provoquer une division uniforme du jet de carburant en deux jets 24a et 24b qui ont été représentés en traits mixtes sur la figure 3, ce qui permet pour assurer un mélange uniforme du carburant avec l'oxygène contenu dans la cavité 18 de révolution.

Par ailleurs, la cavité 18 de révolution comporte :
- une protubérance centrale 30, s'étendant radialement depuis l'axe "A" de la cavité 18 de révolution jusqu'à un diamètre intérieur de la paroi 36 tronconique de révolution,
- un rebord périphérique 38, agencé radialement à l'extérieur de la paroi tronconique 36 de révolution et affleurant à la surface supérieure libre 16 du piston 14,

qui sont destinés à confiner le carburant dans la cavité 18 de révolution.

Cette configuration permet d'assurer un mélange homogène de l'air et du carburant avant sa diffusion dans la zone 28 agencée entre le piston 14 et la culasse 12.

Dans le mode de réalisation préféré de l'invention, la protubérance centrale 30 est conformée en dôme dont le sommet 40 est d'une courbure déterminée et dont les flancs 42 sont jointifs avec le diamètre intérieur de la paroi 36 tronconique de révolution. Cette configuration permet d'assurer un écoulement des gaz entre la paroi 36 et la protubérance centrale 30 qui est exempt de toute perturbation

De préférence, le rebord périphérique 38 comporte au moins une partie annulaire 44 torique convexe formant un bourrelet qui s'étend au dessus d'une partie de la paroi 36 tronconique de révolution et qui affleure à la surface 16 supérieure libre du piston 14.

Par ailleurs, pour assurer une diffusion uniforme du carburant dans la cavité 18 de révolution, l'injecteur 20 comporte au moins trois orifices 22 répartis angulairement de manière régulière autour de l'axe "A" de la cavité 18 de révolution.

Tout moyen connu de l'état de la technique peut être utilisé pour réaliser la cavité 18 de révolution du piston 14. Toutefois, l'état de surface de cette cavité 18 étant un facteur déterminant pour assurer un bon écoulement du carburant, la cavité 18 de révolution est réalisée de préférence par usinage de la tête du piston 14.

L'invention permet donc d'apporter une amélioration sensible des performances d'un moteur à compression à injection directe.

## Revendications

1. Moteur à combustion interne, à allumage par compression et à injection directe, du type qui comporte au moins une chambre (10) de combustion qui est délimitée d'une part par une culasse (12) du moteur et d'autre par un piston (14), monté mobile dans la chambre (10), dans une face (16) supérieure libre duquel débouche une cavité (18) de révolution en forme de bol, et du type qui comporte un injecteur (20) de carburant agencé sensiblement dans l'axe (A) de la cavité (18) de révolution dont au moins un orifice (22) est susceptible de pulvériser un jet (24) de carburant selon un axe (B₃) de pulvérisation déterminé associé dans la cavité (18) de révolution en forme de bol, notamment lorsque le piston (14) atteint une position dite de point mort haut, du type dans lequel l'axe (B) de pulvérisation forme avec l'axe (A) de la cavité (18) de révolution un angle (β₃) compris entre 40 et 60 degrés et du type dans lequel la cavité (18) de révolution comporte au moins une paroi (36) de révolution sensiblement tronconique agencée à la perpendiculaire de l'axe (B₃) de pulvérisation, pour dissiper une partie de l'énergie du jet (24) de carburant au point d'impact (26) du jet (24) sur la paroi (36) de révolution et éviter ainsi que ledit jet (24) ne se recouvre,
**caractérisé en ce que** la paroi (36) tronconique de révolution s'étend de manière équidistante de part et d'autre du point d'impact (26) du jet (24) de manière à provoquer une division uniforme du jet de carburant pour assurer un mélange uniforme du carburant avec l'oxygène contenu dans la cavité (18) de révolution.

2. Moteur selon la revendication précédente, **caractérisé en ce que** la cavité (18) de révolution comporte :
- une protubérance centrale (30), s'étendant radialement depuis l'axe (A) de la cavité (18) de révolution jusqu'à un diamètre intérieur de la paroi (36) tronconique de révolution,
- un rebord périphérique (38), agencé radialement à l'extérieur de la paroi (36) tronconique de révolution et affleurant à la surface supérieure (16) libre du piston (14),
qui sont destinés à confiner le carburant dans la cavité (18) de révolution.

3. Moteur selon la revendication précédente, **caractérisé en ce que** la protubérance centrale (30) est conformée en dôme dont le sommet (40) est d'une courbure déterminée et dont les flancs (42) sont jointifs avec le diamètre intérieur de la paroi (36) tronconique de révolution.

4. Moteur selon l'une des revendications 2 ou 3, **caractérisé en ce que** le rebord périphérique (38) comporte au moins une partie annulaire (44) torique convexe formant un bourrelet qui s'étend au dessus d'une partie de la paroi (36) tronconique de révolution et qui affleure à la surface supérieure (16) libre du piston (14).

5. Moteur selon l'une quelconque des revendications précédentes, **caractérisé en ce que** l'injecteur (20) comporte au moins trois orifices (22) répartis angulairement de manière régulière autour de l'axe (A) de la cavité (18) de révolution.

6. Moteur selon l'une quelconque des revendications précédentes, **caractérisé en ce que** la cavité (18) de révolution est réalisée par usinage de la tête du piston.
